# EUROPEAN PATENT SPECIFICATION

(11) **EP 2 762 916 B1**
(45) Date of publication and mention of the grant of the patent: **22.11.2017**
(21) Application number: 14168677.4
(22) Date of filing: 16.05.2014
(51) Int. Cl.: G01S 13/00, G01S 13/90

(54) **Multi-channel multistatic synthetic aperture radar with stationary receiver and data processing method thereof**
Multistatisches Mehrkanalradar mit synthetischer Apertur und stationären Empfängern sowie dazugehöriges Datenverarbeitungsverfahren
Radar à synthèse d'ouverture multi-statique et multi-canaux avec récepteur fixe et procédé de traitement de données correspondant

(30) Priority: 03.01.2014 CN 201410003728
(43) Date of publication of application: 06.08.2014
(73) Proprietor: Institute of Electronics, Chinese Academy of Sciences, Beijing 100190 (CN)
(72) Inventor: Wang, Yu, 100190 Beijing (CN); Deng, Yunkai, 100190 Beijing (CN); Hong, Feng, 100190 Beijing (CN); Shao, Yunfeng, 100190 Beijing (CN); Zhang, Zhimin, 100190 Beijing (CN); Wang, Chunle, 100190 Beijing (CN)
(74) Representative: Gulde & Partner

(56) References cited:
- INGO WALTERSCHEID ET AL: "Bistatic SAR Experiments With PAMIR and TerraSAR-X---Setup, Processing, and Image Results", IEEE TRANSACTIONS ON GEOSCIENCE AND REMOTE SENSING, IEEE SERVICE CENTER, PISCATAWAY, NJ, US, vol. 48, no. 8, 1 August 2010 (2010-08-01) , pages 3268-3279, XP011307089, ISSN: 0196-2892
- ROBERT WANG ET AL: "Double-Channel Bistatic SAR System With Spaceborne Illuminator for 2-D and 3-D SAR Remote Sensing", IEEE TRANSACTIONS ON GEOSCIENCE AND REMOTE SENSING, IEEE SERVICE CENTER, PISCATAWAY, NJ, US, vol. 51, no. 8, 1 August 2013 (2013-08-01) , pages 4496-4507, XP011521743, ISSN: 0196-2892, DOI: 10.1109/TGRS.2013.2252908

## Description

### TECHNICAL FIELD

The present invention relates to data processing techniques used in a multistatic Synthetic Aperture Radar (SAR), and particularly to a multi-channel multistatic SAR stationary receiver and data processing method thereof.

### BACKGROUND

Compared with a mono-static SAR, a multistatic SAR has many advantages. The multistatic SAR can acquire rich target information. In addition, a multi-channel multistatic SAR is easy to implement with low cost. In the multistatic SAR, the multistatic SAR of a stationary receiver fixes one or more receivers on a hill or on a building at an elevated location. Such a multistatic SAR has advantages in many aspects. For example, multistatic imaging can be implemented by an existing SAR system, and the receivers do not need to return data and an echo signal has larger signal to noise ratio.

Through a multistatic SAR system of a stationary receiver, abundant experiments can be designed, and the feasibility of novel configurations, algorithms and theories can be verified and the like, thus providing references and verification for subsequent high-definition image acquisition, accurate height reconstruction in the aspect of mathematical and physical configuration. However, there are many problems existing in a stationary receiver of a multi-channel multistatic SAR system, e.g. data synchronization and data collection reliability etc. At present, there is no effective stationary receiver which can implement accurate data synchronization and collect reliable data.

Ingo Walterscheid et. Al.: "Bistatic SAR Experiments With PAMIR and TerraSAR-X-Setup, Processing, and Image Results" (IEEE Transactions on Geoscience and Remote Sensing, IEEE service center, Piscataway, NJ, US, vol. 48, no. 8, 1 August 2010) presents bistatic spaceborne/airborne SAR experiments, where the radar satellite TerraSAR-X is used as a transmitter and the airborne SAR sensor Phased Array Multifunctional Imaging Radar (PAMIR) of the Fraunhofer Institute for High Frequency Physics and Radar Techniques (FHR) is used as a receiver. Both sensors are equipped with phased-array antennas, which offer the possibility of beam steering and could be used for the first time for the "double sliding spotlight mode." In this mode, the space- and airborne sensors operate with different sliding factors (ratio between footprint and platform velocity). The performance of two different experiments is analyzed, and the novel double sliding spotlight mode is presented. This paper describes the experimental setups, the synchronization system, and the data acquisition. The image results were processed by a modified backprojection algorithm and a frequency-domain algorithm. The analysis of the final bistatic images comprises the spatial resolution and the scattering behavior of selected objects. Parts of the bistatic SAR images are compared with the corresponding monostatic images of PAMIR and TerraSAR-X. It will be shown that hybrid bistatic SAR is a worthwhile and helpful addition to current monostatic SAR.

Robert Wang, et. Al.: "Double-Channel Bistatic SAR System With Spaceborne Illuminator for 2-D and 3-D SAR Remote Sensing" (IEEE Transactions on Geoscience and Remote Sensing, VOL. 51, NO. 8, August 2013) presents a double-channel hybrid bistatic synthetic aperture radar (SAR) system. It can be implemented with the available illuminator (e.g., spaceborne and airborne SAR systems) to acquire the 2-D and 3-D microwave images for remote-sensing applications. This system can be used as a test system for the validation of complex bistatic acquisitions, novel synchronization algorithms, and advanced imaging techniques. In this paper, we will demonstrate the time and phase synchronization strategies, fast time-domain imaging algorithm, 2-D bistatic SAR, and 3-D bistatic stereo radargrammetry in SAR images. Based on the proposed bistatic system, the acquired bistatic image has a much better sensitivity than its monostatic counterpart, which will facilitate the detection and recognition of targets based on their characteristic and bistatic scattering behaviors. Finally, the experiment results highlight the differences between monotatic and bistatic SAR images.

### SUMMARY

In view of the above, embodiments of the present invention provides a multi-channel multistatic SAR stationary receiver and a data processing method thereof, thus implementing high precision data synchronization and acquiring reliable data.

To realize the purpose above, the technical solution of the embodiments of the present invention is implemented by the following way:
a data processing method for a multi-channel multistatic Synthetic Aperture Radar, SAR, stationary receiver, the multi-channel multistatic SAR stationary receiver comprising an antenna unit, a radio frequency unit, a detection unit, and a data collection unit, the method comprising:
at the antenna unit, receiving one channel of radio frequency signal from a transmitter and N channels of echo signals fed back from a target area, and sending the one channel of radio frequency signal and the N channels of echo signals to the radio frequency unit, wherein N is an integer larger than 1;
at the radio frequency unit, equally splitting the one channel of radio frequency signal into N+1 channels of direct signals, demodulating one of the N+1 channels of direct signals to an intermediate frequency signal, sending the intermediate frequency signal to the detection unit, and sending the other N channels of direct signals of the N+1 channels of direct signals that are used as reference signals of the N channels of echo signals respectively and the N channels of echo signals to the data collection unit;
at the detection unit, detecting the intermediate frequency signal in a time domain, generating a rising edge trigger signal when detecting a pulse signal in the intermediate frequency signal, amplifying the rising edge trigger signal and sending the amplified rising edge trigger signal to the data collection unit;
at the data collection unit, collecting the N channels of direct signals and the N channels of echo signals, upon reception of the rising edge trigger signal from the detection unit,
wherein the detecting the intermediate frequency signal in a time domain and generating a rising edge trigger signal comprises:
   at the detection unit, performing Analog/Digital, A/D, sampling on the intermediate frequency signal in the time domain to obtain a sequence of discrete digital signals;
   at the detection unit, performing digital signal mixing, low pass filtering, down-sampling and sliding envelope detection on the sequence of discrete digital signals, to obtain a detection result;
   at the detection unit, comparing the detection result with a preset threshold value, and generating the rising edge trigger signal when the detection result is larger than or equal to the preset threshold value,
   wherein the step in which the detection unit performs the sliding envelope detection on the sequence of discrete digital signals includes: at the detection unit, performing periodic detection on M sliding envelopes in the sequence of discrete digital signals, wherein M is an integer larger than 1.

Preferably, the multi-channel multistatic SAR stationary receiver further includes a storage unit;
accordingly, the method further includes:
the data collection unit sends the collected N direct signals and N echo signals to the storage unit to be stored;
the storage unit transfers the locally-stored N direct signals and N echo signals to a server through the Ethernet, and processes the N direct signals and the N echo signals through the server.

Preferably, the method further includes:
the data collection unit receives a synchronous pulse signal sent by a frequency source, and sends the synchronous pulse signal to the storage unit to be stored;
the storage unit transfers the synchronous pulse signal to the server through the Ethernet.

A multi-channel multistatic SAR stationary receiver, comprising: an antenna unit, a radio frequency unit, a detection unit and a data collection unit,
wherein the antenna unit is configured to receive one channel of radio frequency signal from a transmitter and N channels of echo signals fed back from a target area and to send the one channel of radio frequency signal and the N channels of echo signals to the radio frequency unit, wherein N is an integer larger than 1;
wherein the radio frequency unit is configured to equally split the one channel of radio frequency signal into N+1 direct signals, to demodulate one of the N+1 channels of direct signals into an intermediate frequency signal, to send the intermediate frequency signal to the detection unit; and to send the other N channels of direct signals of the N+1 channels of direct signals that are used as reference signals of the N channels of echo signals respectively and the N channels of echo signals to the data collection unit;
wherein the detection unit is configured to detect the intermediate frequency signal in a time domain, to generate a rising edge trigger signal when detecting a pulse signal in the intermediate frequency signal, to amplify the rising edge trigger signal and to send the amplified rising edge trigger signal to the data collection unit; and
wherein the data collection unit is configured to collect the N channels of direct signals and the N channels of echo signals, upon reception of the rising edge trigger signal from the detection unit,
wherein the detection unit comprises an A/D sampling sub-unit, a processing sub-unit, a comparison sub-unit and a generating sub-unit,
wherein the A/D sampling sub-unit is configured to perform A/D sampling on the intermediate frequency signal in the time domain to obtain a sequence of discrete digital signals;
wherein the processing sub-unit is configured to perform digital signal mixing, low pass filtering, down-sampling and sliding envelope detection on the sequence of discrete digital signals, to obtain a detection result;
wherein the comparison sub-unit is configured to compare the detection result with a preset threshold value;
wherein the generating sub-unit is configured to generate the rising edge trigger signal when the detection result is larger than or equal to the preset threshold value; and
wherein the processing sub-unit is further configured to perform periodic detection for M sliding envelopes in the sequence of discrete digital signals, wherein M is an integer larger than 1.

Preferably, the multi-channel multistatic SAR stationary receiver further includes: a storage unit;
the data collection unit is further configured to send the collected N direct signals and N echo signals to the storage unit to be stored;
the storage unit is further configured to transfer the locally-stored N direct signals and N echo signals to a server through the Ethernet, and process the N direct signals and the N echo signals through the server.

Preferably, the data collection unit is further configured to receive a synchronous pulse signal sent by a frequency source, and send the synchronous pulse signal to the storage unit to be stored;
the storage unit is further configured to transfer the synchronous pulse signal to the server through the Ethernet.

A data processing method of a multi-channel multistatic SAR stationary receiver in an embodiment of the present invention includes: an antenna unit receives one radio frequency signal sent by the receiver and N echo signals fed back by a target area, wherein N is an integer larger than 1, and sends the one radio frequency signal and the N echo signals to a radio frequency unit; the radio frequency unit decomposes the one radio frequency signal into N+1 direct signals, demodulates one of the N+1 direct signals into an intermediate frequency signal and sends the intermediate frequency signal to a detection unit; and sends other N direct signals in the N+1 direct signals and the N echo signals to a data collection unit; the detection unit detects the intermediate frequency signal in the time domain, and generates a rising edge trigger signal when detecting a pulse signal in the intermediate frequency signal, amplifies the rising edge trigger signal and sends to the data collection unit; when receiving the rising edge trigger signal sent by the detection unit, the data collection unit acquires the N direct signals and the N echo signals, thus implementing high precision data synchronization and acquiring reliable data. In addition, since the technical solution of the embodiments of the present invention is less complicated, the technical solution of the embodiments of the present invention is relatively low in designed cost.

### BRIEF DESCRIPTION OF THE DRAWINGS

Fig. 1 is a flowchart of a data processing method for a multi-channel multistatic SAR stationary receiver according to an embodiment of the present invention;
Fig. 2 is a schematic diagram illustrating signal processing of a data processing method for a multi-channel multistatic SAR stationary receiver of according to embodiment of the present invention;
Fig. 3 is a the first schematic diagram illustrating components of a multi-channel multistatic SAR stationary receiver according to an embodiment of the present invention; and
Fig. 4 is the second schematic diagram illustrating components of a multi-channel multistatic SAR stationary receiver according to an embodiment of the present invention.

### DETAILED DESCRIPTION

To better understand the features and subject matter of the present invention, implementation of the present invention will be described in detail below with reference to the accompanying drawings. The accompanying drawings are merely intended for reference, and are not for limiting the present invention.

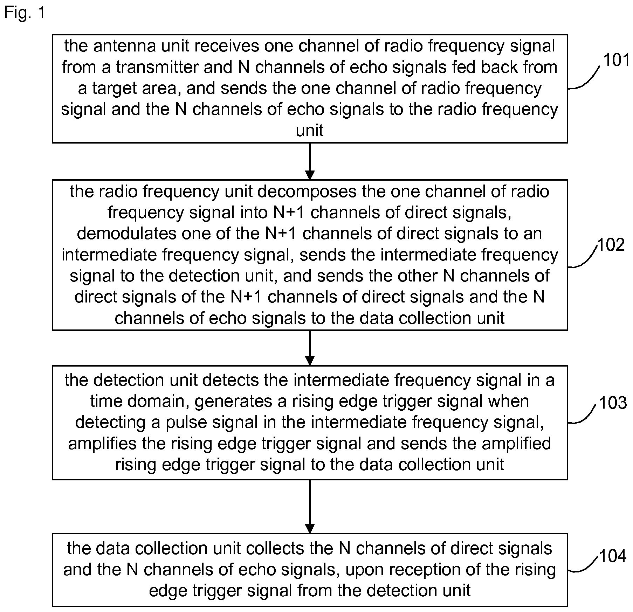

Fig. 1 is a flowchart of a data processing method for a multi-channel multistatic SAR stationary receiver according to an embodiment of the present invention. In the present embodiment, the data processing method for a multi-channel multistatic SAR stationary receiver is applied in a multi-channel multistatic SAR stationary receiver. The multi-channel multistatic SAR stationary receiver includes an antenna unit, a radio frequency unit, a detection unit and a data collection unit. In a preferred embodiment of the present invention, the data processing method for a multi-channel multistatic SAR stationary receiver includes the following steps.

Step 101: the antenna unit receives one channel of radio frequency signal from a transmitter and N channels of echo signals fed back from a target area, and sends the one channel of radio frequency signal and the N channels of echo signals to the radio frequency unit.

Here, N is an integer larger than 1.

In the present embodiment, the multi-channel multistatic SAR includes one or more receivers and one transmitter. The transmitter may be located in a space-borne SAR or an airborne SAR; one or more receivers may be stationary on an elevated location on the ground, e.g. on a hill. When scanning the ground, the multi-channel multistatic SAR transmits, through the transmitter, electromagnetic waves to a target area on the ground first, and then the receivers on the ground receive electromagnetic echoes, known as echo signals, fed back from the target area. Since phase information and the like of the echo signals is relative to that of the electromagnetic waves transmitted by the transmitter, the receivers in the present embodiment only need to receive one channel of radio frequency signal transmitted by the transmitter as a reference source of the echo signals. Specifically, the one channel of radio frequency signal transmitted by the transmitter is received by the antenna units of the receivers.

In the present embodiment, data in different channels, i.e., signal transmission characteristics and target backward scattering characteristics are different from each other. Therefore, multi-channel data can provide richer, more reliable and more useful target characteristic information than single-channel data. Accordingly, the receivers may receive multi-channel data, namely data from multiple channels, by setting multiple receiving sub-apertures on the receivers.

Here the N channels of echo signals may be 6 channels of echo signals or 12 channels of echo signals, etc., and the value of N may be determined according to the number of channels.

In the present embodiment, there are multiple types of antenna units with multiple uses, e.g. a horn-shaped antenna with a large gain and low isolation may be used for receiving one channel of radio frequency signal; other antennae may be set to have different geometrical relationships to receive the N channels of echo signals and thus implement different configurations.

Step 102: the radio frequency unit decomposes the one channel of radio frequency signal into N+1 channel of direct signals, demodulates one of the N+1 channel of direct signals into an intermediate frequency signal and sends the intermediate frequency signal to the detection unit; and sends the other N channel of direct signals in the N+1 channel of direct signals and the N channel of echo signals to the data collection unit.

Here the radio frequency unit equally splits the one channel of radio frequency signal into N+1 channels of direct signals, thus the one channel of radio frequency signal is consistent with all the N+1 channels of direct signals.

Since the one of the N+1 channels of direct signals is taken as a trigger signal for collection of the data collection unit, this channel of direct signal is demodulated into the intermediate frequency signal, and the intermediate frequency signal is sent to the detection unit to be detected while other N channels of direct signals are used as reference signals of the N channels of echo signals respectively. Therefore, other N channels of direct signals and the N channels of echo signals are sent to the data collection unit to be collected.

In the embodiment of the present invention, to implement intermediate-distance transmission, the radio frequency unit uses channels with almost the same phase delay to transmit the N channels of direct signals and the N channels of echo signals respectively, and a signal to noise ratio is increased appropriately to maintain consistence for all collected signals. The radio frequency unit in the present embodiment is provided with 2N channels having an excellent delay which is 15 meters maximally.

Before Step 102, the method further includes:
A Low Noise Amplifier (LNA) in the radio frequency unit adjusts the amplitude of the one channel of radio frequency signal with an appropriate gain parameter, so that the one channel of radio frequency signal can meet a dynamic range of Analog/Digital (A/D) sampling of the detection unit and the data collection unit. The radio frequency signal from the LNA is transmitted to a band-pass filter in the radio frequency unit to filter out an interfering signal outside the band, and then the radio frequency signal is down converted into the intermediate frequency signal.

Step 103: the detection unit detects the intermediate frequency signal in the time domain, generates a rising edge trigger signal when detecting a pulse signal in the intermediate frequency signal, amplifies the rising edge trigger signal and sends the rising edge trigger signal to the data collection unit.

Preferably, the step that the detection unit detects the intermediate frequency signal in the time domain, generates the rising edge trigger signal when detecting the pulse signal in the intermediate frequency signal includes:
- the detection unit performs A/D sampling on the intermediate frequency signal in the time domain to obtain a sequence of discrete digital signals;
- the detection unit performs digital signal mixing, low pass filtering, reduced sampling and sliding envelope detection on the sequence of discrete digital signals to obtain a detection result; and
- the detection unit compares the detection result with a preset threshold value, and generates the rising edge trigger signal when the detection result is larger than or equal to the preset threshold value.

Here, a user may preset the threshold value through a User Interface (UI). Specifically, an ambient noise of the receivers may be tested first and then an appropriate threshold value is selected according to the ambient noise. The threshold value is a minimum value of the detection result. In other words, a detection result smaller than the minimum value may be ignored.

Here, the user may pre-select an algorithm for the above processing procedure through the UI. For example, when detection with excellent performance is needed or a band carrier is seriously interfered by environment, a correlative detection algorithm may be selected; and when detection with weak performance is needed or there is little environmental interference on the band carrier, an envelope detection algorithm may be selected.

Preferably, the step in which the detection unit performs the sliding envelope detection on the sequence of discrete digital signals includes:
- the detection unit performs periodic detection on M sliding envelopes in the sequence of discrete digital signals, where M is an integer larger than 1.

Here, M may be preset through the UI, and generally, N may be 50, 100 etc.

The periodic detection on the M sliding envelopes specifically includes: performing a round of detection for every M sliding envelopes to detect whether there is a signal in the M sliding envelopes.

In the scheme above, the processes including the digital signal mixing, the low pass filtering, the reduced sampling and the sliding envelope detection etc. may be implemented by a Field Programmable Gate Array (FPGA) in the detection unit.

In the scheme above, the generation of the rising edge trigger signal when the detection result is larger than or equal to the preset threshold value includes:
- when the detection result is larger than or equal to the preset threshold value, the trigger signal is generated and transmitted to a Digital Phase Locked Loop (DPLL) sub-unit in the detection unit; and
- after receiving the trigger signal, the DPLL sub-unit generates the rising edge trigger signal.

Step 104: when receiving the rising edge trigger signal from the detection unit, the data collection unit collects the N channels of direct signals and the N channels of echo signals.

Preferably, the multi-channel multistatic SAR stationary receiver further includes a storage unit.

Accordingly, the method further includes:
- the data collection unit sends the collected N channels of direct signals and N channels of echo signals to the storage unit for storage; and
- the storage unit transfers the locally-stored N channels of direct signals and N channels of echo signals to a server through the Ethernet, and the N channels of direct signals and the N channels of echo signals are processed by the server.

Preferably, the method further includes:
- the data collection unit receives a synchronous pulse signal from a frequency source, and sends the synchronous pulse signal, the N channels of direct signals and the N channels of echo signals to the storage unit for storage; and
- the storage unit transfers the locally stored N channels of direct signals, the N channels of echo signals and the synchronous pulse signal to the server through the Ethernet, and the N direct signals and the N echo signals are processed by the server.

In the scheme above, the data collection unit may be implemented by an FPGA.

In the present embodiment, the data collection unit has advantages of high data transmission rate, long collection time, large collection capacity, large storage capacity, high synchronization precision and various trigger modes etc.. Specifically, the data collection unit, which has a maximal sampling rate as high as 2GSPS, can acquire a data volume of 4T maximally and input a signal source with a stationary frequency to perform synchronization. The phase synchronization performance of the N channels of direct signals and the N channels of echo signals in the data collection unit is higher than 30 ps. In addition, the data collection unit has three trigger modes including: continuous collection, wave gate level collection and trigger collection.

In the present embodiment, the data collection unit sends the N direction signals and the N echo signals to the server respectively through N channels, wherein one direct signal and one echo signal are transmitted by each channel and preferably transferred to the server at a transmission rate of 40MB/s through the Ethernet.

In the scheme above, the UI may be implemented by software running in a storage medium and the user may set collection parameters and control an operation state using the software according to actual demands. Specifically, the user may set status parameters such as collection, observation, transfer, erasure, bad block updating, and self-inspection etc.. The user may further set the number of channels, the data length of a display signal and entries of displayed collection records. The user may further correct the synchronicity of collected signals, read collected data at a high rate in real time and perform time-domain and frequency-domain analysis.

The receiver in the present embodiment may further include a Global Positioning System (GPS) stationary point measuring device. Multiple GPS stationary point measuring devices and corner reflectors provide necessary information for processing the echo signals, and support verifications of various experimental designs.

In order to test the method in the embodiment of the present invention, a radio frequency signal may be generated by a radar simulator. The antenna unit receives the radio frequency signal and then performs the method provided by the embodiment of the present invention to tune each parameter in the scheme above of the present embodiment.

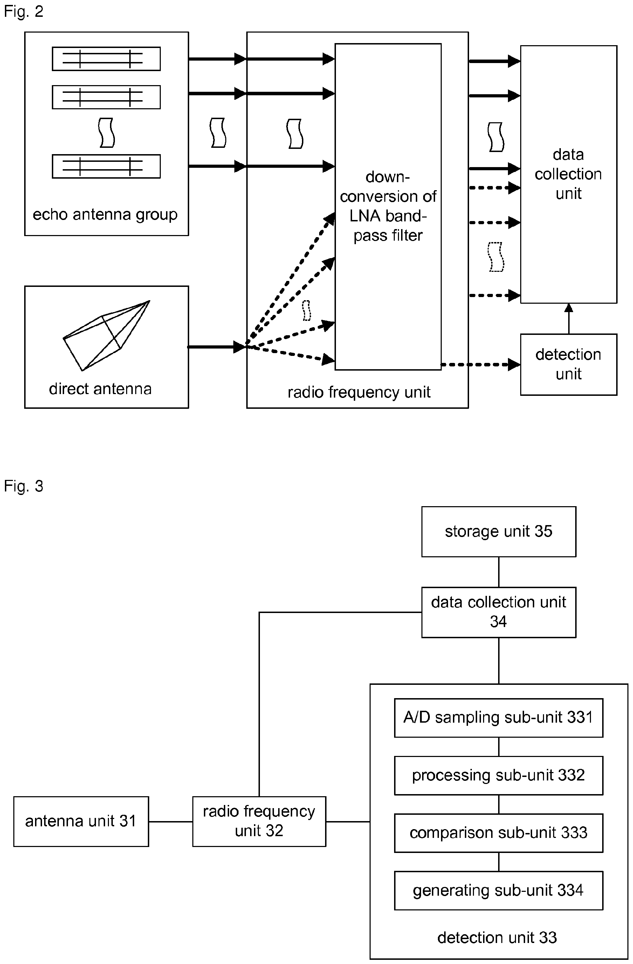

In combination with the data processing method for a multi-channel multistatic SAR stationary receiver in the embodiment above and the parameters as shown in Table 1, as shown in Fig. 2, a direct antenna receives one channel of radio frequency signal from the transmitter; an echo antenna group receives 6 channels of echo signals fed back from a target area. The echo antenna group sends the 6 channels of echo signals to 6 LNAs in the radio frequency unit respectively, to be amplified; the LNAs then transmit N channels of echo signals to the band-pass filter in the radio frequency unit to filter out interfering signals out of the band; the radio frequency signals then are down converted into intermediate frequency signals; at the same time, the direct antenna transmits one channel of radio frequency signal to the radio frequency unit. The radio frequency unit decomposes the one channel of radio frequency signal into 7 channels of direct signals, one of which is amplified by the LNA and then transmitted to the band-pass filter in the radio frequency unit to filter out the interfering signals out of the band; the radio frequency signal is then down converted into an intermediate frequency signal; similarly, the other 6 channels of direct signals are also amplified by the LNAs and then transmitted to the band-pass filter in the radio frequency unit to filter out the interfering signals out of the band, and then, the radio frequency signal is down converted into an intermediate frequency signal. Then the one channel of direct signal is transmitted to the detection unit to be detected, and the 6 channels of direct signals and the 6 channels of echo signals are transmitted to the data collection unit; a detection threshold of the detection unit is set as -2dBm, and for the detection algorithm, a sliding envelope detection in the time domain is employed; when detecting a pulse signal, the detection unit generates a rising edge trigger signal, amplifies the rising edge trigger signal and demodulates the rising edge trigger signal to -6dBm to be outputted to the data collection unit; specifically, the detection unit performs A/D sampling for one direction signal to obtain a sequence of discrete digital signals, performs digital mixing, low pass filtering and reduced sampling on the sequence of discrete digital signals, then performs sliding envelop detection with a length of M=255 on the sequence of discrete digital signals, sends a detection result to a comparator for comparison, generates a trigger signal when the detection result is larger than or equal to the preset threshold value and transmits the trigger signal to the DPLL sub-unit. The DPLL sub-unit generates the rising edge trigger signal and sends the rising edge trigger signal to the data collection unit. After receiving the rising edge trigger signal of the detection unit, the data collection unit performs data collection on the 6 channels of direct signals and the 6 channels of echo signals for 120µs, and stores the data on a large capacity storage device, and after the collection, all data is transferred to the server with the Ethernet at 40MB/s. In this way, the sampling rate is as high as 2GSPS, the sampling frequency is 725MHz and the volume of the collected data is 7.9GB, the input synchronization signal source frequency is 100MHz, the phase synchronization performance of the data collection system is better than 30ps, and trigger collection is applied.

**Table 1**

| Parameters | Value |
|---|---|
| Direct channel signal interval | 120µs |
| Signal bandwidth | 300MHz |
| A/D sampling rate | 725MHz |
| Signal to noise ratio | 0dB |
| Time domain rectangular window length M | 255 |

Fig. 3 is the first schematic diagram illustrating components of a multi-channel multistatic SAR stationary receiver according to an embodiment of the present invention. As shown in Fig. 3, the multi-channel multistatic SAR stationary receiver in the present embodiment includes: an antenna unit 31, a radio frequency unit 32, a detection unit 33 and a data collection unit 34.

The antenna unit 31 is configured to receive one channel of radio frequency signal from a transmitter and N channels of echo signals fed back from a target area, where N is an integer larger than 1; and send the one channel of radio frequency signal and the N channels of echo signals to the radio frequency unit 32.

The radio frequency unit 32 is configured to decompose the one channel of radio frequency signal into N+1 channels of direct signals, demodulate one of the N+1 channels of direct signals into an intermediate frequency signal and send the intermediate frequency signal to the detection unit 33; and send the other N channels of direct signals in the N+1 channels of direct signals and the N channels of echo signals to the data collection unit 34.

The detection unit 33 is configured to detect the intermediate frequency signal in the time domain, generate a rising edge trigger signal when detecting a pulse signal in the intermediate frequency signal, amplify the rising edge trigger signal and send the rising edge trigger signal to the data collection unit 34.

The data collection unit 34 is configured to collect the N channels of direct signals and the N channels of echo signals when receiving the rising edge trigger signal from the detection unit 33.

Preferably, the detection unit 33 includes an A/D sampling sub-unit 331, a processing sub-unit 332, a comparison sub-unit 333 and a generating sub-unit 334.

The A/D sampling sub-unit 331 is configured to perform A/D sampling on the intermediate frequency signal in the time domain to obtain a sequence of discrete digital signals.

The processing sub-unit 332 is configured to perform digital signal mixing, low pass filtering, reduced sampling and sliding envelope detection on the sequence of discrete digital signals respectively to obtain a detection result.

The comparison sub-unit 333 is configured to compare the detection result with a preset threshold value.

The generating sub-unit 334 is configured to generate the rising edge trigger signal when the detection result is larger than or equal to the preset threshold value.

Preferably, in an embodiment, the multi-channel multistatic SAR stationary receiver further includes: a storage unit 35.

In this embodiment, the data collection unit 34 is further configured to send the collected N channels of direct signals and N channels of echo signals to the storage unit 35 for storage.

In this embodiment, the storage unit 35 is further configured to transfer the locally-stored N channels of direct signals and N channels of echo signals to a server through the Ethernet, and the N channels of direct signals and the N channels of echo signals are processed by the server.

Preferably, in an embodiment, the data collection unit 34 is further configured to receive a synchronous pulse signal from a frequency source, and send the synchronous pulse signal, the N channels of direct signals and the N channels of echo signals to the storage unit 35 for storage.

In this embodiment, the storage unit 35 is further configured to transfer the locally stored N channels of direct signals, the N channels of echo signals and the synchronous pulse signal to the server through the Ethernet, and the N channels of direct signals and the N channels of echo signals are processed by the server.

Preferably, in an embodiment, the processing sub-unit 332 is further configured to perform periodic detection on M sliding envelopes in the sequence of discrete digital signals, wherein M is an integer larger than 1.

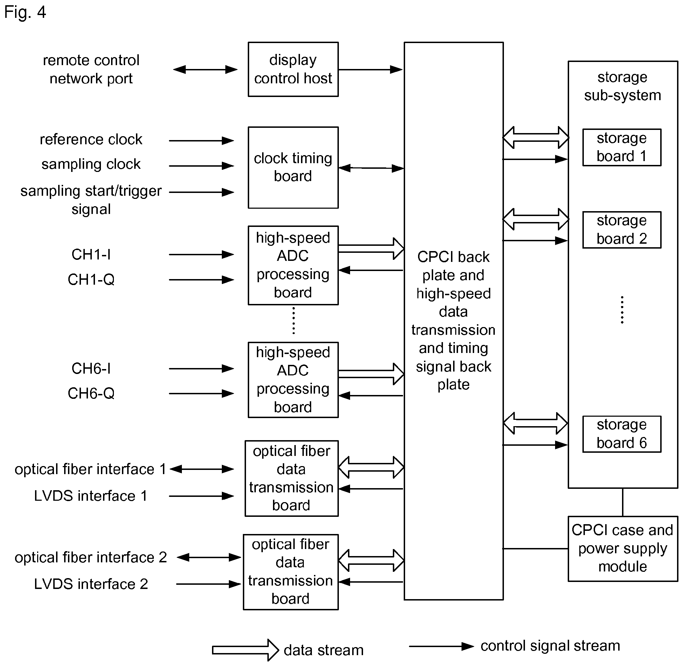

In a specific implementation, the multi-channel multistatic SAR stationary receiver in the present invention may be implemented through a structure as shown in Fig. 4. As shown in Fig. 4, a display host is the UI. A user may set parameters through the display host. A clock timing board may provide a reference clock and a sampling clock for the receiver. Multiple high speed Analog-to-Digital Converter (ADC) processing boards may implement A/D sampling. An optical fiber data channel transmission board may implement data transmission. A Compact Peripheral Component Interconnect (CPCI) base plate and a high speed data transmission and timing signal base plate correspond to the radio frequency unit, the detection unit and the data collection unit in the multi-channel multistatic SAR stationary receiver. Multiple storage boards correspond to the storage device. A CPCI case and a power supply module provide an energy source for the receiver.

In several embodiments provided by the present invention, it should be understood that the disclosed device and method may be implemented in other ways. The described device embodiments are merely exemplary. For example, the division of the units is merely logical function division and can taken another form in an actual implementation. For example, multiple units or components can be combined or integrated into another system, or some features may be ignored or skipped. Furthermore, the coupling, direct coupling or communication connection among the components illustrated or discussed herein may be implemented through indirect coupling or communication connection between devices or units through some interfaces, and may be electrical, mechanical, or in other forms.

The units described as separate components may be or may not be physically separated. Components shown as units may be or may not be physical units, namely, they may be located in one place, or distributed on multiple network elements. Some or all of the units may be selected to implement the scheme of the present embodiment according to practice.

In addition, various functional units in each embodiment of the present invention may be integrated in one processing unit or the units may exist as separate units, or two or more units may also be integrated in one unit. The integrated unit may be implemented in a form of hardware, or may also be implemented in a form of hardware and software functional units.

A person of ordinary skill in the art can understand that, all or part of the steps of the foregoing method embodiments may be implemented by hardware with program instructions installed therein. The program may be stored in a computer readable storage medium, and when executed, performs the preceding steps included in the method embodiments. The foregoing storage medium includes various media capable of storing program codes, including a mobile storage device, a Read-Only Memory (ROM), a Random Access Memory (RAM), a magnetic disk, or an optical disk etc.

Or when implemented as a software function module and sold or used as an independent product, the integrated unit may be also stored in a computer-readable storage medium. Based on such understanding, the essence of the technical solution of the embodiments of the present invention, or the part contributing to the prior art may be embodied in a form of a software product. The computer software product is stored in a storage medium, including several instructions enabling a computer device (which may be a personal computer, a server, or a network device etc.) to execute all or part of the method in each embodiment of the present invention. The storage medium includes various media capable of storing program codes, including a mobile storage device, an ROM, am RAM, a magnetic disk, or an optical disk etc.

The foregoing descriptions are merely specific embodiments of the present invention, but not intended to limit the protection scope of the present invention. Any modification or replacement easily thought of by persons skilled in the prior art within the technical scope disclosed by the present invention should fall within the protection scope of the present invention. Therefore, the protection scope of the present invention should be subject to the protection scope of the claims.

The above are only preferred embodiments of the present invention and should not be used for limiting the protection scope of the present invention.

## Claims

1. A data processing method for a multi-channel multistatic Synthetic Aperture Radar, SAR, stationary receiver, the multi-channel multistatic SAR stationary receiver comprising an antenna unit, a radio frequency unit, a detection unit, and a data collection unit, the method comprising:
(101) at the antenna unit, receiving one channel of radio frequency signal from a transmitter and N channels of echo signals fed back from a target area, and sending the one channel of radio frequency signal and the N channels of echo signals to the radio frequency unit, wherein N is an integer larger than 1;
(102) at the radio frequency unit, equally splitting the one channel of radio frequency signal into N+1 channels of direct signals, demodulating one of the N+1 channels of direct signals to an intermediate frequency signal, sending the intermediate frequency signal to the detection unit, and sending the other N channels of direct signals of the N+1 channels of direct signals that are used as reference signals of the N channels of echo signals respectively and the N channels of echo signals to the data collection unit;
(103) at the detection unit, detecting the intermediate frequency signal in a time domain, generating a rising edge trigger signal when detecting a pulse signal in the intermediate frequency signal, amplifying the rising edge trigger signal and sending the amplified rising edge trigger signal to the data collection unit;
(104) at the data collection unit, collecting the N channels of direct signals and the N channels of echo signals, upon reception of the rising edge trigger signal from the detection unit,
wherein the detecting the intermediate frequency signal in a time domain and generating a rising edge trigger signal comprises:
at the detection unit, performing Analog/Digital, A/D, sampling on the intermediate frequency signal in the time domain to obtain a sequence of discrete digital signals;
at the detection unit, performing digital signal mixing, low pass filtering, down-sampling and sliding envelope detection on the sequence of discrete digital signals, to obtain a detection result;
at the detection unit, comparing the detection result with a preset threshold value, and generating the rising edge trigger signal when the detection result is larger than or equal to the preset threshold value,
wherein the sliding envelope detection comprises:
at the detection unit, performing periodic detection on M sliding envelopes in the sequence of discrete digital signals, wherein M is an integer larger than 1.

2. The data processing method for the multi-channel multistatic SAR stationary receiver according to claim 1, wherein the multi-channel multistatic SAR stationary receiver further comprises a storage unit;
the method further comprises:
at the data collection unit, sending the collected N channels of direct signals and N channels of echo signals to the storage unit for storage;
at the storage unit, transferring the locally-stored N channels of direct signals and N channels of echo signals to a server through the Ethernet, and processing the N channels of direct signals and the N channels of echo signals through the server.

3. The data processing method for the multi-channel multistatic SAR stationary receiver according to claim 2, wherein the method further comprises:
at the data collection unit, receiving a synchronous pulse signal from a frequency source, and sending the synchronous pulse signal to the storage unit for storage; and
at the storage unit, transferring the synchronous pulse signal to the server through the Ethernet.

4. A multi-channel multistatic SAR stationary receiver, comprising: an antenna unit (31), a radio frequency unit (32), a detection unit (33) and a data collection unit (34),
wherein the antenna unit (31) is configured to receive one channel of radio frequency signal from a transmitter and N channels of echo signals fed back from a target area and to send the one channel of radio frequency signal and the N channels of echo signals to the radio frequency unit, wherein N is an integer larger than 1;
wherein the radio frequency unit (32) is configured to equally split the one channel of radio frequency signal into N+1 direct signals, to demodulate one of the N+1 channels of direct signals into an intermediate frequency signal, to send the intermediate frequency signal to the detection unit; and to send the other N channels of direct signals of the N+1 channels of direct signals that are used as reference signals of the N channels of echo signals respectively and the N channels of echo signals to the data collection unit;
wherein the detection unit (33) is configured to detect the intermediate frequency signal in a time domain, to generate a rising edge trigger signal when detecting a pulse signal in the intermediate frequency signal, to amplify the rising edge trigger signal and to send the amplified rising edge trigger signal to the data collection unit; and
wherein the data collection unit (34) is configured to collect the N channels of direct signals and the N channels of echo signals, upon reception of the rising edge trigger signal from the detection unit,
wherein the detection unit (33) comprises an A/D sampling sub-unit (331), a processing sub-unit (332), a comparison sub-unit (333) and a generating sub-unit (334),
wherein the A/D sampling sub-unit (331) is configured to perform A/D sampling on the intermediate frequency signal in the time domain to obtain a sequence of discrete digital signals;
wherein the processing sub-unit (332) is configured to perform digital signal mixing, low pass filtering, down-sampling and sliding envelope detection on the sequence of discrete digital signals, to obtain a detection result;
wherein the comparison sub-unit (333) is configured to compare the detection result with a preset threshold value; and
wherein the generating sub-unit (334) is configured to generate the rising edge trigger signal when the detection result is larger than or equal to the preset threshold value,
wherein the processing sub-unit (332) is further configured to perform periodic detection on M sliding envelopes in sequence of the discrete digital signals, wherein M is an integer larger than 1.

5. The multi-channel multistatic SAR stationary receiver according to claim 4, wherein the multi-channel multistatic SAR stationary receiver further comprises a storage unit (35);
wherein the data collection unit (34) is further configured to send the collected N channels of direct signals and N channels of echo signals to the storage unit for storage; and
wherein the storage unit (35) is further configured to transfer the locally-stored N channels of direct signals and N channels of echo signals to a server through the Ethernet, and to process the N channels of direct signals and the N channels of echo signals through the server.

6. The multi-channel multistatic SAR stationary receiver according to claim 5,
wherein the data collection unit (34) is further configured to receive a synchronous pulse signal from a frequency source, and to send the synchronous pulse signal to the storage unit for storage;
wherein the storage unit (35) is further configured to transfer the synchronous pulse signal to the server through the Ethernet.

## Patentansprüche

1. Datenverarbeitungsverfahren für einen stationären Empfänger eines multistatischen Multikanal-Radars mit synthetischer Apertur SAR, wobei der stationäre Empfänger des multistatischen Multikanal-SAR eine Antenneneinheit, eine Radiofrequenzeinheit, eine Erkennungseinheit und eine Datensammeleinheit umfasst, wobei das Verfahren Folgendes umfasst:
(101) an der Antenneneinheit Empfangen eines Kanals eines Radiofrequenzsignals von einem Sender und von N Kanälen von Echosignalen, die von einem Zielbereich zurückgeführt werden, und Senden des einen Kanals eines Radiofrequenzsignals und der N Kanäle von Echosignalen an die Radiofrequenzeinheit, wobei N eine ganze Zahl ist, die größer als 1 ist;
(102) an der Radiofrequenzeinheit gleiches Aufteilen des einen Kanals eines Radiofrequenzsignals in N+1 Kanäle von direkten Signalen, Demodulieren eines der N+1 Kanäle von direkten Signalen zu einem Zwischenfrequenzsignal, Senden des Zwischenfrequenzsignals an die Erkennungseinheit und Senden der anderen N Kanäle von direkten Signalen der N+1 Kanäle von direkten Signalen, die jeweils als Referenzsignale der N Kanäle von Echosignalen verwendet werden, und der N Kanäle von Echosignalen an die Datensammeleinheit;
(103) an der Erkennungseinheit Erkennen des Zwischenfrequenzsignals in einer Zeitdomäne, Erzeugen eines Anstiegflankenauslösesignals, wenn ein Impulssignal in dem Zwischenfrequenzsignal erkannt wird, Verstärken des Anstiegflankenauslösesignals und Senden des verstärkten Anstiegflankenauslösesignals an die Datensammeleinheit;
(104) an der Datensammeleinheit Sammeln der N Kanäle von direkten Signalen und der N Kanäle von Echosignalen bei Empfang des Anstiegflankenauslösesignals von der Erkennungseinheit,
wobei das Erkennen des Zwischenfrequenzsignals in einer Zeitdomäne und das Erzeugen eines Anstiegflankenauslösesignals Folgendes umfasst:
an der Erkennungseinheit Durchführen von Analog/Digital-Abtastung (A/D-Abtastung) an dem Zwischenfrequenzsignal in der Zeitdomäne, um eine Sequenz von separaten digitalen Signalen zu erhalten;
an der Erkennungseinheit Durchführen einer Mischung von digitalen Signalen, einer Tiefpassfilterung, eines Downsamplings und einer Erkennung von gleitenden Hüllkurven an der Sequenz von separaten digitalen Signalen, um ein Erkennungsergebnis zu erhalten;
an der Erkennungseinheit Vergleichen des Erkennungsergebnisses mit einem voreingestellten Grenzwert und Erzeugen des Anstiegflankenauslösesignals, wenn das Erkennungsergebnis größer gleich dem voreingestellten Grenzwert ist,
wobei die Erkennung von gleitenden Hüllkurven Folgendes umfasst:
an der Erkennungseinheit Durchführen einer periodischen Erkennung an M gleitenden Hüllkurven in der Sequenz von separaten digitalen Signalen, wobei M eine ganze Zahl ist, die größer als 1 ist.

2. Datenverarbeitungsverfahren für den stationären Empfänger des multistatischen Multikanal-SAR nach Anspruch 1, wobei der stationäre Empfänger des multistatischen Multikanal-SAR weiterhin eine Speichereinheit umfasst;
wobei das Verfahren weiterhin Folgendes umfasst:
an der Datensammeleinheit Senden der gesammelten N Kanäle von direkten Signalen und N Kanäle von Echosignalen an die Speichereinheit zur Speicherung;
an der Speichereinheit Übertragen der lokal gespeicherten N Kanäle von direkten Signalen und N Kanäle von Echosignalen an einen Server durch das Ethernet und Verarbeiten der N Kanäle von direkten Signalen und der N Kanäle von Echosignalen durch den Server.

3. Datenverarbeitungsverfahren für den stationären Empfänger des multistatischen Multikanal-SAR nach Anspruch 2, wobei das Verfahren weiterhin Folgendes umfasst:
an der Datensammeleinheit Empfangen eines synchronen Impulssignals von einer Frequenzquelle und Senden des synchronen Impulssignals an die Speichereinheit zur Speicherung und
an der Speichereinheit Übertragen des synchronen Impulssignals an den Server durch das Ethernet.

4. Stationärer Empfänger eines multistatischen Multikanal-SAR, umfassend: eine Antenneneinheit (31), eine Radiofrequenzeinheit (32), eine Erkennungseinheit (33) und eine Datensammeleinheit (34),
wobei die Antenneneinheit (31) dazu konfiguriert ist, einen Kanal eines Radiofrequenzsignals von einem Sender und N Kanäle von Echosignalen, die von einem Zielbereich zurückgeführt werden, zu empfangen und den einen Kanal eines Radiofrequenzsignals und die N Kanäle von Echosignalen an die Radiofrequenzeinheit zu senden, wobei N eine ganze Zahl ist, die größer als 1 ist;
wobei die Radiofrequenzeinheit (32) dazu konfiguriert ist, den einen Kanal eines Radiofrequenzsignals gleich in N+1 direkte Signale aufzuteilen, einen der N+1 Kanäle von direkten Signalen zu einem Zwischenfrequenzsignal zu demodulieren, das Zwischenfrequenzsignal an die Erkennungseinheit zu senden und die anderen N Kanäle von direkten Signalen der N+1 Kanäle von direkten Signalen, die jeweils als Referenzsignale der N Kanäle von Echosignalen verwendet werden, und die N Kanäle von Echosignalen an die Datensammeleinheit zu senden;
wobei die Erkennungseinheit (33) dazu konfiguriert ist, das Zwischenfrequenzsignal in einer Zeitdomäne zu erkennen, ein Anstiegflankenauslösesignal zu erzeugen, wenn ein Impulssignal in dem Zwischenfrequenzsignal erkannt wird, das Anstiegflankenauslösesignal zu verstärken und das verstärkte Anstiegflankenauslösesignal an die Datensammeleinheit zu senden; und
wobei die Datensammeleinheit (34) dazu konfiguriert ist, die N Kanäle von direkten Signalen und die N Kanäle von Echosignalen bei Empfang des Anstiegflankenauslösesignals von der Erkennungseinheit zu sammeln,
wobei die Erkennungseinheit (33) eine A/D-Abtastungsuntereinheit (331), eine Verarbeitungsuntereinheit (332), eine Vergleichsuntereinheit (333) und eine Erzeugungsuntereinheit (334) umfasst,
wobei die A/D-Abtastungsuntereinheit (331) dazu konfiguriert ist, eine A/D-Abtastung an dem Zwischenfrequenzsignal in der Zeitdomäne durchzuführen, um eine Sequenz von separaten digitalen Signalen zu erhalten;
wobei die Verarbeitungsuntereinheit (332) dazu konfiguriert ist, eine Mischung von digitalen Signalen, eine Tiefpassfilterung, ein Downsampling und eine Erkennung von gleitenden Hüllkurven an der Sequenz von separaten digitalen Signalen durchzuführen, um ein Erkennungsergebnis zu erhalten;
wobei die Vergleichsuntereinheit (333) dazu konfiguriert ist, das Erkennungsergebnis mit einem voreingestellten Grenzwert zu vergleichen; und
wobei die Erzeugungsuntereinheit (334) dazu konfiguriert ist, das Anstiegflankenauslösesignal zu erzeugen, wenn das Erkennungsergebnis größer gleich dem voreingestellten Grenzwert ist,
wobei die Verarbeitungsuntereinheit (332) weiterhin dazu konfiguriert ist, eine periodische Erkennung an M gleitenden Hüllkurven in der Sequenz von separaten digitalen Signalen durchzuführen, wobei M eine ganze Zahl ist, die größer als 1 ist.

5. Stationärer Empfänger des multistatischen Multikanal-SAR nach Anspruch 4, wobei der stationäre Empfänger des multistatischen Multikanal-SAR weiterhin eine Speichereinheit (35) umfasst;
wobei die Datensammeleinheit (34) weiterhin dazu konfiguriert ist, die gesammelten N Kanäle von direkten Signalen und N Kanäle von Echosignalen an die Speichereinheit zur Speicherung zu senden; und
wobei die Speichereinheit (35) weiterhin dazu konfiguriert ist, die lokal gespeicherten N Kanäle von direkten Signalen und N Kanäle von Echosignalen an einen Server durch das Ethernet zu übertragen und die N Kanäle von direkten Signalen und die N Kanäle von Echosignalen durch den Server zu verarbeiten.

6. Stationärer Empfänger des multistatischen Multikanal-SAR nach Anspruch 5,
wobei die Datensammeleinheit (34) weiterhin dazu konfiguriert ist, ein synchrones Impulssignal von einer Frequenzquelle zu empfangen und das synchrone Impulssignal an die Speichereinheit zur Speicherung zu senden;
wobei die Speichereinheit (35) weiterhin dazu konfiguriert ist, das synchrone Impulssignal an den Server durch das Ethernet zu übertragen.

## Revendications

1. Procédé de traitement de données pour récepteur fixe de radar à synthèse d'ouverture SAR, soit Synthetic Aperture Radar, multistatique et multicanal, le récepteur fixe de SAR multistatique multicanal comprenant une unité d'antenne, une unité de radiofréquence, une unité de détection et une unité de collecte de données, le procédé comprenant :
(101) sur l'unité d'antenne, la réception d'un canal de signal de radiofréquence provenant d'un transmetteur et de N canaux de signaux d'écho renvoyés par une zone cible, et l'envoi dudit canal de signal de radiofréquence et desdits N canaux de signaux d'écho à l'unité de radiofréquence, dans lequel N est un entier supérieur à 1 ;
(102) sur l'unité de radiofréquence, la division en parts égales d'un canal de signal de radiofréquence en N+1 canaux de signaux directs, la démodulation d'un desdits N+1 canaux de signaux directs en un signal de fréquence intermédiaire, l'envoi du signal de fréquence intermédiaire à l'unité de détection, et l'envoi des autres N canaux de signaux directs parmi lesdits N+1 canaux de signaux directs qui sont utilisés respectivement comme signaux de référence des N canaux de signaux d'écho et lesdits N canaux de signaux d'écho à l'unité de collecte de données ;
(103) sur l'unité de détection, la détection du signal de fréquence intermédiaire dans un domaine temporel, la génération d'un signal de déclenchement par front montant lors de la détection d'un signal d'impulsion dans le signal de fréquence intermédiaire, l'amplification du signal de déclenchement par front montant, et l'envoi du signal de déclenchement par front montant amplifié à l'unité de collecte de données ;
(104) sur l'unité de collecte de données, la collecte des N canaux de signaux directs et des N canaux de signaux d'écho, lors de la réception du signal de déclenchement par front montant provenant de l'unité de détection,
dans lequel la détection du signal de fréquence intermédiaire dans le domaine temporel et la génération d'un signal de déclenchement par front montant comprennent :
sur l'unité de détection, la mise en oeuvre d'un échantillonnage analogique-numérique A/D, soit Analog/Digital, du signal de fréquence intermédiaire dans le domaine temporel pour obtenir une séquence de signaux numériques discrets ;
sur l'unité de détection, la mise en oeuvre d'un mélange de signaux numériques, d'une filtration passe-bas, d'un sous-échantillonnage et d'une détection d'enveloppe glissante sur la séquence de signaux numériques discrets, pour obtenir un résultat de détection ;
sur l'unité de détection, la comparaison du résultat de détection à une valeur seuil préétablie, et la génération du signal de déclenchement par front montant quand le résultat de détection est supérieur ou égal à la valeur seuil préétablie,
dans lequel la détection d'enveloppe glissante comprend :
sur l'unité de détection, la mise en oeuvre d'une détection périodique de M enveloppes glissantes dans la séquence de signaux numériques discrets, dans lequel M est un entier supérieur à 1.

2. Procédé de traitement de données pour le récepteur fixe de SAR multistatique multicanal selon la revendication 1, dans lequel le récepteur fixe de SAR multistatique multicanal comprend en outre une unité de stockage ;
le procédé comprenant en outre :
sur l'unité de collecte de données, l'envoi des N canaux de signaux directs et des N canaux de signaux d'écho collectés à l'unité de stockage pour leur stockage ;
sur l'unité de stockage, le transfert des N canaux de signaux directs et des N canaux de signaux d'écho stockés localement à un serveur via Ethernet, et le traitement des N canaux de signaux directs et des N canaux de signaux d'écho via le serveur.

3. Procédé de traitement de données pour le récepteur fixe de SAR multistatique multicanal selon la revendication 2, dans lequel le procédé comprend en outre :
sur l'unité de collecte de données, la réception d'un signal d'impulsion synchrone provenant d'une source de fréquence, et l'envoi du signal d'impulsion synchrone à l'unité de stockage pour son stockage ; et
sur l'unité de stockage, le transfert du signal d'impulsion synchrone au serveur via Ethernet.

4. Récepteur fixe de SAR multistatique multicanal, comprenant : une unité d'antenne (31), une unité de radiofréquence (32), une unité de détection (33) et une unité de collecte de données (34),
dans lequel l'unité d'antenne (31) est configurée pour recevoir un canal de signal de radiofréquence provenant d'un transmetteur et N canaux de signaux d'écho renvoyés par une zone cible, et pour envoyer ledit canal de signal de radiofréquence et lesdits N canaux de signaux d'écho à l'unité de radiofréquence, dans lequel N est un entier supérieur à 1 ;
dans lequel l'unité de radiofréquence (32) est configurée pour diviser en parts égales ledit canal de signal de radiofréquence en N+1 signaux directs, pour démoduler un desdits N+1 canaux de signaux directs en un signal de fréquence intermédiaire, pour envoyer le signal de fréquence intermédiaire à l'unité de détection, et pour envoyer les autres N canaux de signaux directs parmi lesdits N+1 canaux de signaux directs qui sont respectivement utilisés comme signaux de référence des N canaux de signaux d'écho et les N canaux de signaux d'écho à l'unité de collecte de données ;
dans lequel l'unité de détection (33) est configurée pour détecter le signal de fréquence intermédiaire dans un domaine temporel, pour générer un signal de déclenchement par front montant lors de la détection d'un signal d'impulsion dans le signal de fréquence intermédiaire, pour amplifier le signal de déclenchement par front montant, et pour envoyer le signal de déclenchement par front montant amplifié à l'unité de collecte de données ; et
dans lequel l'unité de collecte de données (34) est configurée pour collecter les N canaux de signaux directs et les N canaux de signaux d'écho, lors de la réception du signal de déclenchement par front montant provenant de l'unité de détection,
dans lequel l'unité de détection (33) comprend une sous-unité d'échantillonnage A/D (331), une sous-unité de traitement (332), une sous-unité de comparaison (333) et une sous-unité de génération (334),
dans lequel la sous-unité d'échantillonnage A/D (331) est configurée pour mettre en oeuvre un échantillonnage sur le signal de fréquence intermédiaire dans le domaine temporel pour obtenir une séquence de signaux numériques discrets ;
dans lequel la sous-unité de traitement (332) est configurée pour mettre en oeuvre un mélange de signaux numériques, un filtrage passe-bas, un sous-échantillonnage et une détection d'enveloppe glissante sur la séquence de signaux numériques discrets, pour obtenir un résultat de détection ;
dans lequel la sous-unité de comparaison (333) est configurée pour comparer le résultat de détection à une valeur seuil préétablie ; et
dans lequel la sous-unité de génération (334) est configurée pour générer le signal de déclenchement par front montant quand le résultat de détection est supérieur ou égal à la valeur seuil préétablie,
dans lequel la sous-unité de traitement (332) est en outre configurée pour mettre en oeuvre une détection périodique sur M enveloppes glissantes en séquence des signaux numériques discrets, dans lequel M est un entier supérieur à 1.

5. Récepteur fixe de SAR multistatique multicanal selon la revendication 4, dans lequel le récepteur fixe de SAR multistatique multicanal comprend en outre une unité de stockage (35) ;
dans lequel l'unité de collecte de données (34) est en outre configurée pour envoyer les N canaux de signaux directs et les N canaux de signaux d'écho collectés à l'unité de stockage pour leur stockage ; et
dans lequel l'unité de stockage (35) est en outre configurée pour transférer les N canaux de signaux directs et les N canaux de signaux d'écho stockés localement à un serveur via Ethernet, et pour traiter les N canaux de signaux directs et les N canaux de signaux d'écho via le serveur.

6. Récepteur fixe de SAR multistatique multicanal selon la revendication 5,
dans lequel l'unité de collecte de données (34) est en outre configurée pour recevoir un signal d'impulsion synchrone provenant d'une source de fréquence, et pour envoyer le signal d'impulsion synchrone à l'unité de stockage pour son stockage ;
dans lequel l'unité de stockage (35) est en outre configurée pour transférer le signal d'impulsion synchrone au serveur via Ethernet.
